# EUROPEAN PATENT APPLICATION

(11) **EP 2 309 148 A2**
(43) Date of publication of application: **13.04.2011**
(21) Application number: 09738539.7
(22) Date of filing: 29.04.2009
(51) Int. Cl.: F16F 1/362

(54) **JOINING ELEMENT BETWEEN MODULES FOR CONSTRUCTIONS**

(30) Priority: 29.04.2008 ES 200801311
(71) Applicant: Compact-Habit, S. L., 08261 Cardona (ES)
(72) Inventor: TRAGANT RUANO, Jose, E-08261 Cardona (ES); MORTE MORALES, Miguel, E-08912 Badalona (ES)
(74) Representative: Ponti Sales, Adelaida
(86) International application number: PCT/IB2009/051748
(87) International publication number: WO 2009/133526

(57) **Abstract**

Flexible joining element (1) for constructions for placing between contiguous parts of said construction in order to transmit vertical or horizontal loads, which includes at least one body (2) made of braided and pressed steel strands that support said loads, with said braided and pressed steel strands being **characterised by** a deformation-tension curve that has a zone of shallower slope A and a zone of steeper slope B, with said body using in relation to said curve the zone of greater slope B, thus providing a material especially suited for the stacking of prefabricated modules for construction, particularly due to its deformation-tension characteristics and its high level of predictability which make it very practical for predicting the response of the structure.

## Description

The present invention relates to a joining element for construction, especially for transferring loads between modules, preferably prefabricated and made of reinforced concrete, provided with a material which when used under certain conditions allows flexible, reliable, lasting and easily installed joints to be made and which, when said prefabricated modules are stacked, contributes towards making buildings of considerable height.

### BACKGROUND OF THE INVENTION

Known in the art are modular prefabricated concrete elements for dwellings.

Such elements are generally conceived for arranging contiguously and stacked in order finally to form buildings several storeys high.

For structural and constructional reasons it is necessary to provide vertical and horizontal joints between contiguous elements in the vertical and horizontal directions, respectively.

One common solution is to use rigid joining elements, generally made of steel, so as to form rigid joints between contiguous elements.

The rigid nature of such joints nevertheless leads to inflexible structures with limitations vis-à-vis seismic forces. Such forces are related with the dimensions of the buildings obtained by stacking of prefabricated modules.

One solution to this limitation lies in the utilisation in these joining elements of some material with elastic characteristics that lend the building a degree of flexibility that allows it to absorb vibrations and reduce the maximum tensions created due to horizontal forces. This solution further achieves a new characteristic, that of isolating from transmission of vibrations of an acoustic nature.

One example of such a material is neoprene, which does indeed present suitable elasticity characteristics from the mechanical point of view.

This solution nevertheless presents a number of disadvantages, namely:
- it has a low durability that cannot be guaranteed, since this is an organic material. This means that the joining elements, which degrade with time, will have to be replaced periodically. In the case of exposed or easily accessed joins this may be deemed a minor problem, but in the case of joints between stacked modules the problem becomes greater because the modules have to be unstacked in order to replace the neoprene.
- Moreover, from the constructional viewpoint it also presents disadvantages, such as the need to level the joints. The latter, owing to the maximum admissible force on neoprene under compression, need considerable contact areas, which must be levelled very precisely in order to avoid zones with high stresses. This levelling is usually carried out with mortar, which adds additional stages during assembly and in turn involves greater time and costs, which is particularly critical in the case of constructions with prefabricated modules, in which those two criteria are fundamental.
- From the foregoing there also derives the need to have large-area supports, which can involve difficulties in adapting the modules to such supports, since a large exterior area thereof is affected.
- A fourth disadvantage of neoprene is the current lack of knowledge of how it behaves in the transmission of vibrations, which lack of knowledge prevents optimisation of the joints between modules, and therefore prevents precise prediction of the acoustic response of a stacking implementation using a large number of elements.

Examples of this are described in the document EP 1700964 A2.

It is therefore clear that the construction sector, and especially the specific sector of building based on prefabricated elements for construction, lacks a joining element that overcomes the aforesaid disadvantages.

### DESCRIPTION OF THE INVENTION

To that end, the present invention proposes a joining element that overcomes the problems of the state of the art and that presents other characteristics and advantages that will be set out below.

The flexible joining element for constructions for placement between contiguous parts of said construction in order to transmit vertical or horizontal loads is **characterised in that** it includes at least one body made of braided and pressed steel strands, preferably stainless or galvanised, which supports the vertical or horizontal loads transmitted between adjoining modules, with said braided and pressed steel strands characterised by a deformation-tension curve that has a zone of shallower slope and a zone of steeper slope, with said body using in relation to said curve the zone of steeper slope.

This material, at present used as an antivibration support for heavy machines, has characteristics that make it particularly suited to the construction sector, and especially to buildings constructed with prefabricated modules, and even more especially to reinforced-concrete buildings. These characteristics are set out below.

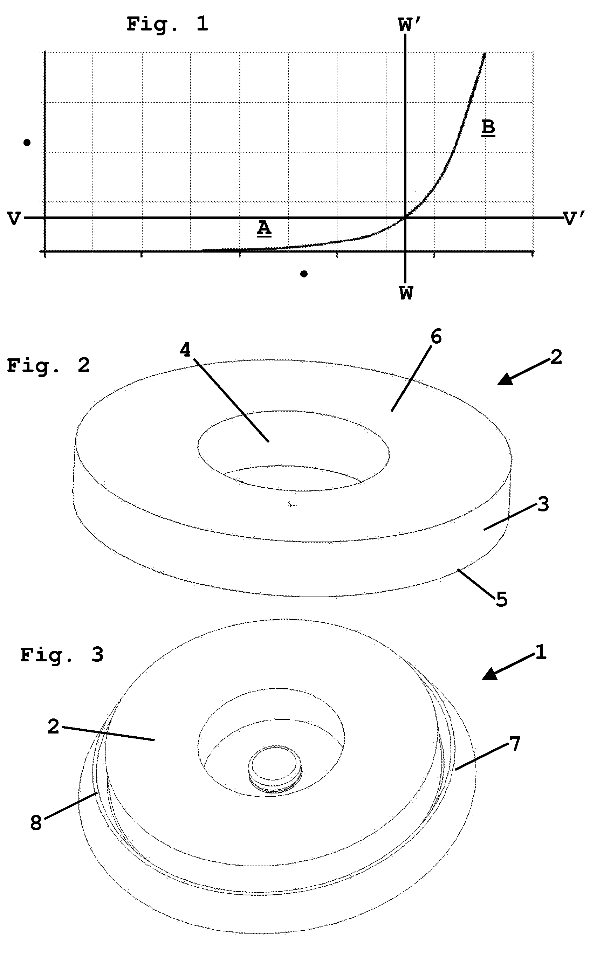

It has deformation-tension behaviour that is very well-suited for adjustment during the stacking process and for supporting high loads, both static and dynamic. This material is characterised by a tension-deformation diagram (tension σ on the y-axis and deformation δ on the x-axes), as illustrated in Figure 1, in which two response zones can be clearly distinguished. There is a first zone A (situated under a tension indicated by VV' and for deformations to the left of WW') in which the slope is shallower, and a second zone B (situated above a tension indicated by VV' and for deformations to the right of WW') where it is much steeper. The first corresponds to a highly elastic response in which the material is deformed greatly under the action of the initial loads, because much of the volume is air. In the second, the element is already greatly compacted and accordingly moves little under application of an extra load. Therefore, during the assembly phase, the high elasticity allows it to deform greatly, such that the material acts as an initial cushion of adaptation to the irregularities of the concrete, so that no stage of small-scale levelling is required. According to the invention, the material making up said body, which carries out the function of transmitting stresses, is made to work (when placed between two adjoining stacked modules) in the zone of greater slope, i.e. in a zone of the deformation-tension diagram in which large forces involve only small movements. In the event of an earthquake, therefore, or any action that involves a considerable increase in stresses, this material will therefore move little and thereby ensure the stability of the building, due particularly to the relative position between joined modules not altering.

The aforesaid division of the tension-deformation diagram can be obtained approximately by dividing it into two zones that are situated both sides of the deformation corresponding to the intersection of the x-axes with the tangent to the curve for high tensions and deformations.

Owing the widespread use of this material in the industrial machinery sector, its response under all working conditions is very well known, and particularly its response in static situations and when subjected to vibrations. In the case of constructions with a large number of storeys resulting from the stacking of modules, especially prefabricated modules, simulation of the structural response is essential in order to achieve optimum dimensions, without which it is impossible to reach great building heights. Such simulation and the resulting prediction from the viewpoint of dynamic loads, and particularly those originating from earthquakes, is only possible when the response of the materials considered in the simulation is known very well, as in the case of pressed braided steel.

Preferably, the above-mentioned body has an outline delimited by two coaxial cylinders and two planes perpendicular to the axis of said cylinders. Already known in its application in machines, this shape is optimum in that it permits radial expansion of the material in both directions, and thus can work under compression with high loads. For this purpose the body can be placed on a circular steel base provided with a perimetral rim for housing said body. This base is placed on the upper surface of a module and the body fits into it in such a way that said joining element is centred in the position that has been determined.

Advantageously, the joining element of the invention comprises two coaxial cylindrical pieces of different diameter, forming between them a volume in which is housed at least one, though preferably four or six of said bodies, with the innermost piece being designed to receive a positioning element whose lower part is fitted into a first lower module and whose outermost part is for inserting into the module immediately above it, so that said body transmits the lateral forces between said pieces and therefore between said first lower module and said second module immediately above it.

A positioning joining element is therefore obtained that can transmit horizontal stresses in any direction. Indeed, for the positioning to be correct a positioning appendage, which is usually a solid oblong-shaped element embedded into the lower element, has to be inserted with precision into an opening in the element immediately above it. This precision implies a joint between two upper and lower elements that can transmit forces but not vibrations.

More advantageously, the joining element of the invention includes at least one, though preferably four or more preferably still six of said bodies placed between the aforesaid cylinders and by the fact that they are equi-spaced angularly. With the structure described, such vibrations are absorbed by the braided steel material. More particularly, the four or six bodies allow for there to be always one working under compression and absorbing the forces/stresses or vibrations.

Preferably, the pieces each have covers on one of their ends, with said covers having at least one orifice, in such a way that said cylindrical pieces can be attached to each other by at least one fastening screw, which allows the prefabricated element to be manufactured together with the larger-diameter piece and the rest of the element to be fitted later. Similarly, with such a configuration if any of the braided steel bodies has to be replaced then the joining element can be dismantled easily.

Preferably, the joining element of the invention includes two bent plates each provided with an orifice, each one for attachment to adjoining modules, and said orifices facing opposite each other in order to house a joining screw and a plurality of washers, and is **characterised in that** said at least one body is placed between at least two of said washers, and mounted in such a way that said body can transmit the horizontal loads between said adjoining modules.

Advantageously, the orifices of said plates have slack play of approximately 1 cm when said screw is inserted, thereby allowing a height and depth movement that allows construction defects to be taken up.

Finally, the joining element of the invention includes two of said bodies placed between two pairs of washers, with at least one of them being between said two plates and the other by the other side of the plates in relation to the preceding one, so that the element can transmit forces in the longitudinal direction of said screw in both directions.

### BRIEF DESCRIPTION OF THE DRAWINGS

For a better understanding of what has been set out some drawings are enclosed which, schematically and solely by way of non-restrictive example, show three practical cases of embodiment.
Figure 1 is a deformation-tension diagram typical of the braided and pressed steel strand used in the element of the invention.
Figure 2 is a perspective view of the body corresponding to a first preferred embodiment of the invention.
Figure 3 is a perspective view of the element incorporating the body of Figure 2.
Figure 4 is an elevation section of the element of the invention according to a second preferred embodiment of the invention.
Figure 5 is a plan section corresponding to the element of Figure 4.
Figure 6 is a breakdown in perspective of the element of Figures 4 and 5.
Figure 7 is a perspective view of a third embodiment of the invention.
Figure 8 is a frontal schematic view of a set of four prefabricated modules showing the arrangement of the joining elements of the invention.
Figure 9 is a section showing the placement of a joining element according to the third embodiment in an upper module that receives a positioning element whose lower part is housed in a lower prefabricated module.

### DESCRIPTION OF PREFERRED EMBODIMENTS

There follows a description of three preferred embodiments of the invention, corresponding to:
1. a joining element for transmitting forces that are mainly vertical and between two adjoining modules in a vertical direction.
2. a positioning joining element that can transmit forces in any horizontal direction between two adjoining modules in the vertical direction.
3. a joining element for transmitting lateral (horizontal) forces between two adjoining modules in a horizontal direction.

### First preferred embodiment

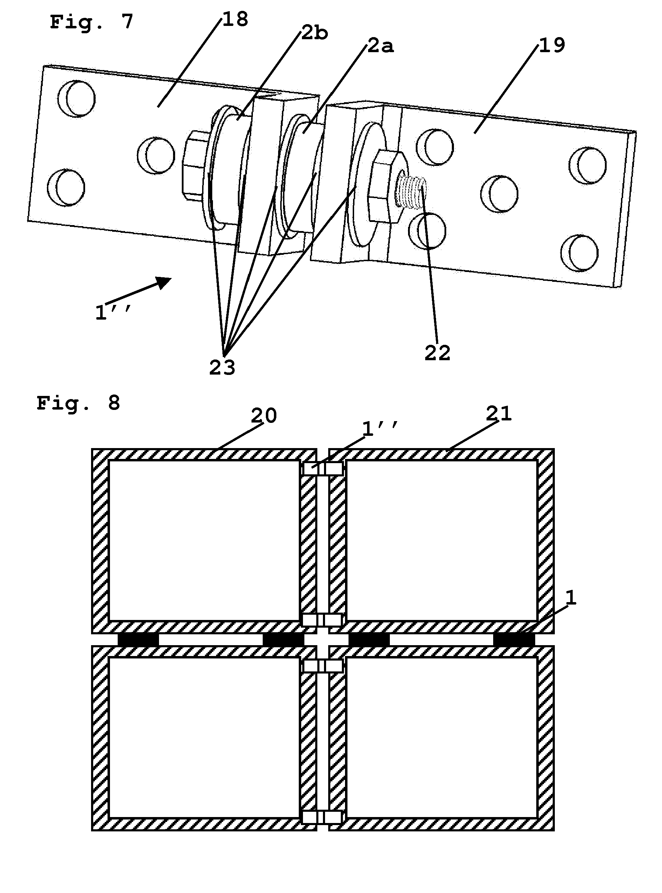

As shown in Figure 2, according to a first embodiment of the invention, the joining element 1 is a body whose form is delimited by two coaxial cylinders 3 and 4 and two planes 5 and 6 perpendicular to the axis of said cylinders. With a view to optimum positioning between stacked adjoining modules, the joining element according to this first preferred embodiment can comprise a steel circular base 7 provided with a perimetral rim 8 for housing said body. Its arrangement between two prefabricated modules is shown in Figure 8, with reference 1'.

### Second preferred embodiment

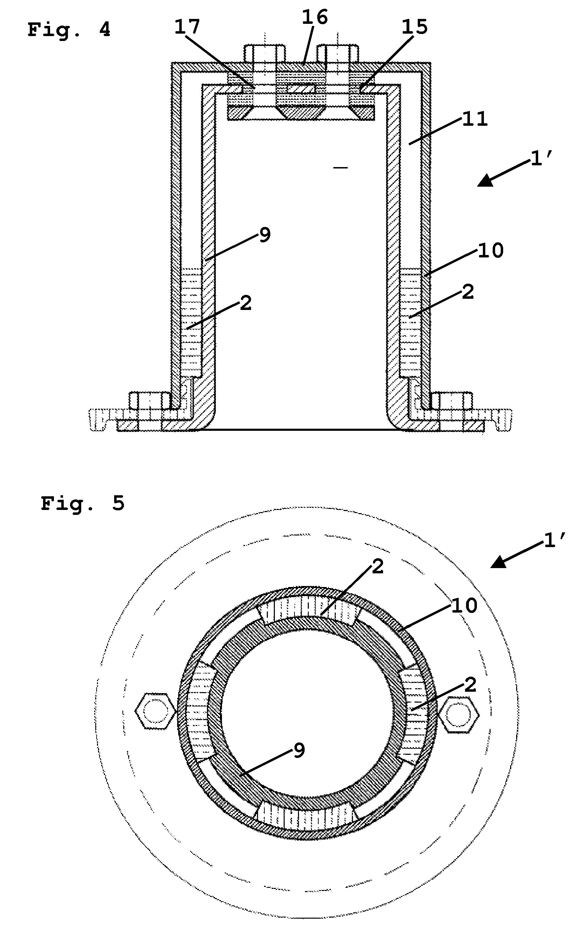

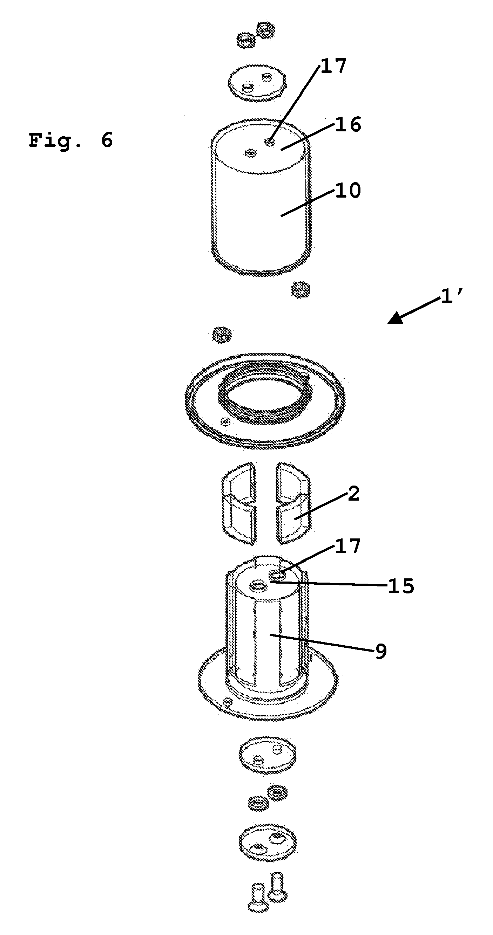

As shown in figures 4, 5 and 6, according to a second preferred embodiment of the invention, the joining element 1' comprises two coaxial cylindrical pieces 9 and 10 of different diameter, forming between them a volume 11 in which are housed four angularly equi-spaced bodies 2. In this preferred embodiment there are four bodies, though the design could always allow for six. These bodies 2 are of substantially parallelepiped form arched according to the curvatures of the cylinders that confine them along their larger faces, as the breakdown of Figure 6 shows.

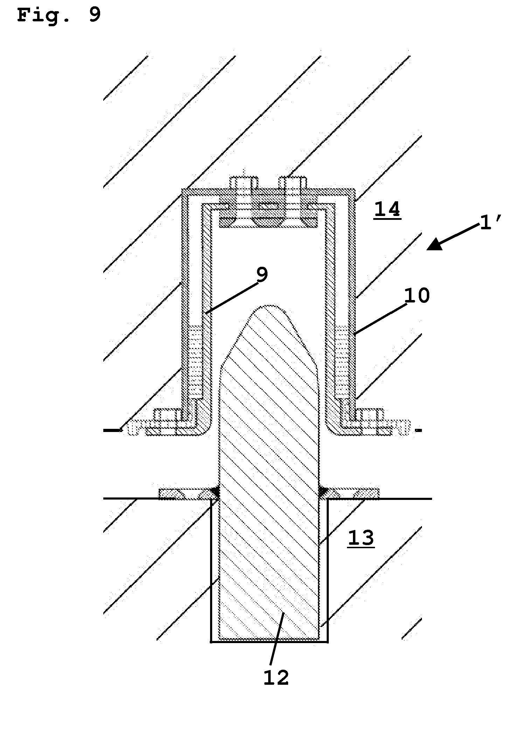

With this structure, the innermost piece 9 is designed to receive a positioning element 12, as shown in Figure 9, fitted by its lower part into a first lower module 13 and with the outermost part 10 to be left fitted into the module immediately above it 14, so that the four bodies transmit the lateral forces between the pieces and therefore between the first lower module 13 and the second immediately higher module 14.

In this second embodiment, the above-mentioned pieces each include covers 15 and 16 with at least one orifice 17 on one of their ends, such that said cylindrical pieces can be attached to each other by one or more fastening screws, as shown in figures 4 and 6.

### Third preferred embodiment

According to another embodiment, the joining element 1'' of the invention is of the type that includes two bent plates 18 and 19 each provided with at least one orifice, and each one for attachment to as many adjoining modules 20, 21, with said orifices facing opposite each other in order to take an attachment screw 22 and a plurality of washers 23, as shown in Figure 7. More specifically, this embodiment is **characterised in that** said at least one body 2a or 2b is placed between at least two of said washers 23, placed in such a way that said body can transmit the horizontal loads between said adjoining modules 20 and 21, as shown in Figure 8.

In order to be able to transmit forces in the longitudinal direction of said screw in both directions, the joining element can include two of said bodies placed between two pairs of washers, with at least one of them 2a situated between said two plates, and the other 2b on the other side of one of the plates in relation to the preceding one.

Accordingly, in a building formed of prefabricated elements, the simultaneous use of the three forms of preferred embodiment of the invention allows a flexible and predictable structural response to be achieved with the calculation, such that buildings many storeys high can be assembled with structural solidity.

## Claims

1. Flexible joining element (1) for constructions for placement between contiguous parts of said construction in order to transmit vertical or horizontal loads, **characterised in that** it includes at least one body (2) made of braided and pressed steel strands which supports said loads, while said pressed braided steel strand is **characterised by** a deformation-tension curve that has a zone of shallower slope A and a zone of steeper slope B, with said body using in relation to said curve the zone of steeper slope B.

2. Joining element according to Claim 1, **characterised in that** said construction is a building and said contiguous parts are prefabricated modules of reinforced concrete or metal placed contiguously or stacked to form said building.

3. Joining element according to Claim 2, **characterised in that** said body has an outline delimited by two coaxial cylinders (3, 4) and two planes (5, 6) perpendicular to the axis of said cylinders.

4. Joining element according to Claim 3, **characterised in that** it includes a circular steel base (7) provided with a perimetral rim (8) for housing said body, and **in that** said base is attached to the upper surface of a module.

5. Joining element (1') according to Claim 2, **characterised in that** it comprises two coaxial cylindrical pieces (9, 10) of different diameter, forming between them a volume (11) in which is housed at least one of said bodies (2), with the innermost piece (9) being designed to receive a positioning element (12) whose lower part is fitted into a first lower module (13) and whose outermost part (10) is for inserting into the module immediately above it (14), so that said at least one body (2) transmits the lateral forces between said pieces and therefore between said first lower module (13) and said second module immediately above it (14).

6. Joining element according to Claim 5, **characterised in that** it includes four or six of said bodies (2) placed between the aforesaid cylinders and by the fact that they are equi-spaced angularly.

7. Joining element according to Claim 5, **characterised in that** said pieces each have covers (15, 16) on one of their ends with at least one orifice (17), in such a way that said cylindrical pieces can be attached to each other by at least one fastening screw.

8. Joining element according to Claim 2, which includes two bent plates (18, 19) each provided with an orifice, each one for attachment to adjoining modules (20, 21), and with said orifices opposite each other in order to house a joining screw (22) and a plurality of washers (23), **characterised in that** said at least one body (2) is placed between at least two of said washers (23), so arranged that said body can transmit the horizontal loads between said adjoining modules (20, 21).

9. Joining element (1'') according to the preceding claim, **characterised in that** it includes two of said bodies (2) placed between two pairs of washers (23), with at least one of them (2a) being between said two plates and the other (2b) on the other side of least one of the plates in relation to the preceding one, so that the element can transmit forces in the longitudinal direction of said screw (22) in both directions.

10. Joining element according to the preceding claim, **characterised in that** said orifices of said plates have free play of approximately one centimetre when said screw is inserted.
